# EUROPEAN PATENT SPECIFICATION

(11) **EP 4 000 833 B1**
(45) Date of publication and mention of the grant of the patent: **30.10.2024**
(21) Application number: 22150056.4
(22) Date of filing: 19.05.2017
(51) Int. Cl.: B27L 5/02, F26B 9/04, B27D 3/00

(54) **A METHOD FOR MANUFACTURING VENEERS**
VERFAHREN ZUR HERSTELLUNG VON FURNIEREN
PROCÉDÉ DE FABRICATION DE PLACAGES

(43) Date of publication of application: 25.05.2022
(62) Divisional of application: 17397512.9
(73) Proprietor: UPM Plywood Oy, 15140 Lahti (FI)
(72) Inventor: Koski, Anna, 00100 Helsinki (FI); Kiuru, Jani, 00100 Helsinki (FI); Härkönen, Riku, 00100 Helsinki (FI); Koponen, Simo, 00100 Helsinki (FI)
(74) Representative: Berggren Oy

(56) References cited:
- CA-A- 1 007 964
- US-A- 3 318 014
- US-A- 4 396 049
- US-A- 4 602 663
- US-A1- 2014 000 464
- J F LUTZ: "TECHNIQUES FOR PEELING SLICING, AND DRYING VENEER", 1 January 1974 (1974-01-01), pages 1 - 68, XP055416988, Retrieved from the Internet <URL:https://www.fpl.fs.fed.us/documnts/fplrp/fplrp228.pdf> [retrieved on 20171018]

## Description

### Technical field

The invention relates to a method, according to the preamble of claim 1, for manufacturing veneers, i.e. sheets of wood.

### Background

Plywood is manufactured by laying sheets of veneers on top of each other, adhesive in between, and pressing them to form a plywood panel. When manufacturing plywood, the veneers to be pressed are preferably substantially dry in order to avoid e.g. warping of the panel. Therefore, the veneer sheets are dried. Typically drying comprises at least drying by hot air. Recently it has also been found that a veneer can be pre-dried at least to some extent by pressing aqueous solution out of it. A device for such a purpose is known.

In order to efficiently dry the veneers, preferably the veneers are dried by compression as much as practically possible. Parameters affecting the drying include time and pressure. In principle, the higher the pressure and the longer the time, the more water can be squeezed out from the veneers. However, the pressure for compression must not be too high in order not to break the veneers. Moreover, for process efficiency, the drying time must not be too high. In this way, the dryness after the compressive drying is somewhat limited.

### Summary

It has been found that the quality of the veneer sheets dried by compression affects the drying. In particular, it has been found that the amount and/or size of the peeling checks affects drying. It seems that by increasing the number and/or size of the peeling checks (i.e. lathe check, peeling cracks, or lathe cracks) improves drying. Moreover, it has been found that the evenness of a surface of a veneer formed by peeling affects drying. It seems that by increasing the surface roughness of the veneers, compressive drying can be improved. Moreover, it has been found that such veneers for compressive drying can be produced using a special type of a veneer lathe. In particular, it has been found that a by using a veneer lathe having a roller nose bar these properties of the veneer are better in terms of compressive drying than for veneers manufactured by some other means.

The invention is disclosed in the independent claim. Preferable embodiments are disclosed in the dependent claims. The description discloses also further embodiments.

### Brief description of the drawings

- Fig. 1a: shows in a principal view, a process for manufacturing veneers,
- Fig. 1b: shows in a principal view, a process for manufacturing plywood from the veneers,
- Fig. 2a: shows, in a side view, peeling a wood block in a veneer lathe having a roller nose bar,
- Fig. 2b: shows, as seen from top, peeling a wood block in a veneer lathe having a roller nose bar,
- Fig. 2c: shows, as seen from bottom, peeling a wood block in a veneer lathe having a roller nose bar,
- Fig. 2d: shows, in a side view, peeling a wood block in a spindless veneer lathe having a roller nose bar,
- Fig. 3a: shows, in a side view, peeling a wood block in a veneer lathe having a roller nose bar,
- Fig. 3b: shows, in a side view, peeling a wood block in a veneer lathe having a fixed nose bar,
- Figs. 3c to 3g: show non-rotatory methods for manufacturing veneers,
- Fig. 4a: shows, in a first side view, flow of aqueous liquid during drying veneers by pressing,
- Fig. 4b: shows, in a second side view, pressing a stack of veneers and different parts of the stack,
- Fig. 4c: shows, in a top view, a veneer made using a lathe with a roller nose bar,
- Fig. 4d: shows, in a top view, a veneer made using a lathe with a roller nose bar,
- Fig. 5a: shows, in a top view, a veneer sample
- Fig. 5b: shows, in a top view, a veneer sample having a stripe made of colouring substance
- Fig. 5c: shows, in a side view, peeling checks of a veneer sample, the sample being cut along the cutting line CL of Fig. 5b,
- Fig. 5d: shows, in a side view, various measures characterizing the peeling checks,
- Fig. 6: shows, in a side view, cutting veneer to veneer sheets, and a device for the purpose,
- Fig. 7a: shows, in a side view, drying veneers by pressing a stack of veneers, and a device for the purpose, and
- Fig. 7b: shows, in a perspective view, a device for drying veneers by pressing, i.e. a press.

### Detailed description

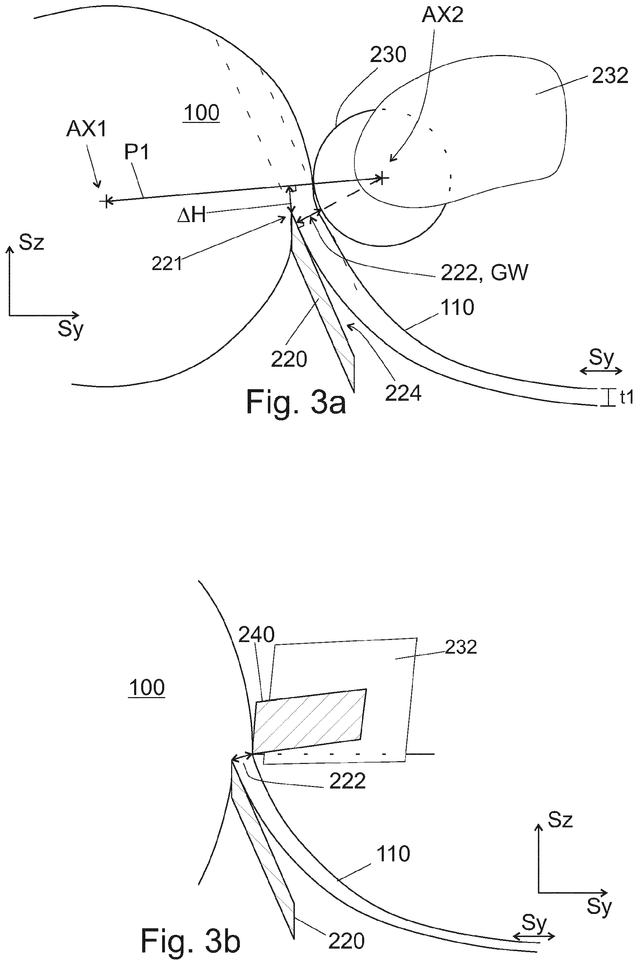

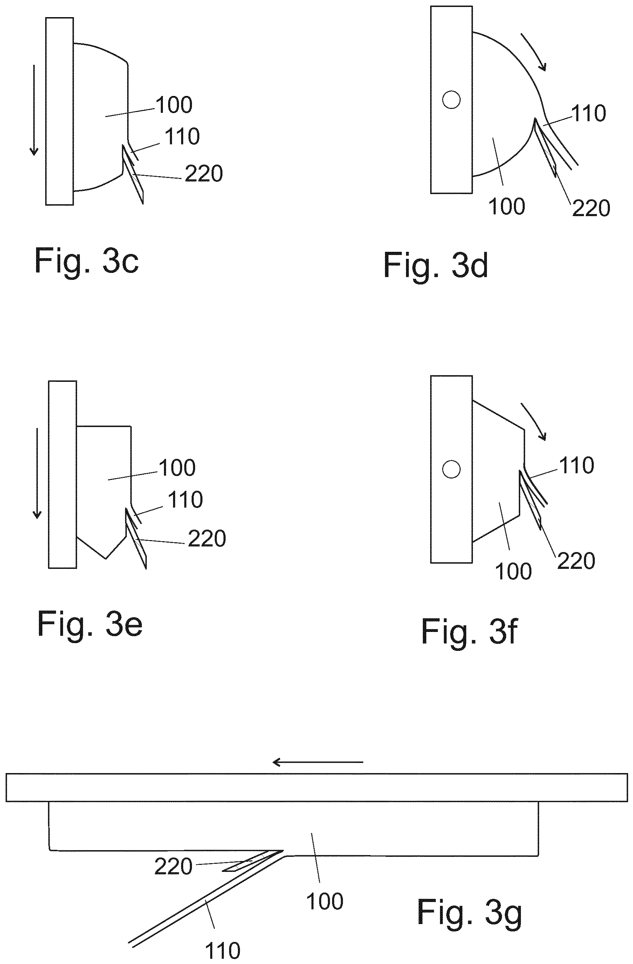

Dried veneer sheets are commonly used to manufacture plywood. In order the manufacture veneer 110 and/or veneer sheets 120 from a wood block 100, various methods are known. Methods to produce veneer may be classified as rotary methods, as shown in figures 3a and 3b, and non-rotary methods, as shown in figures 3c to 3g.

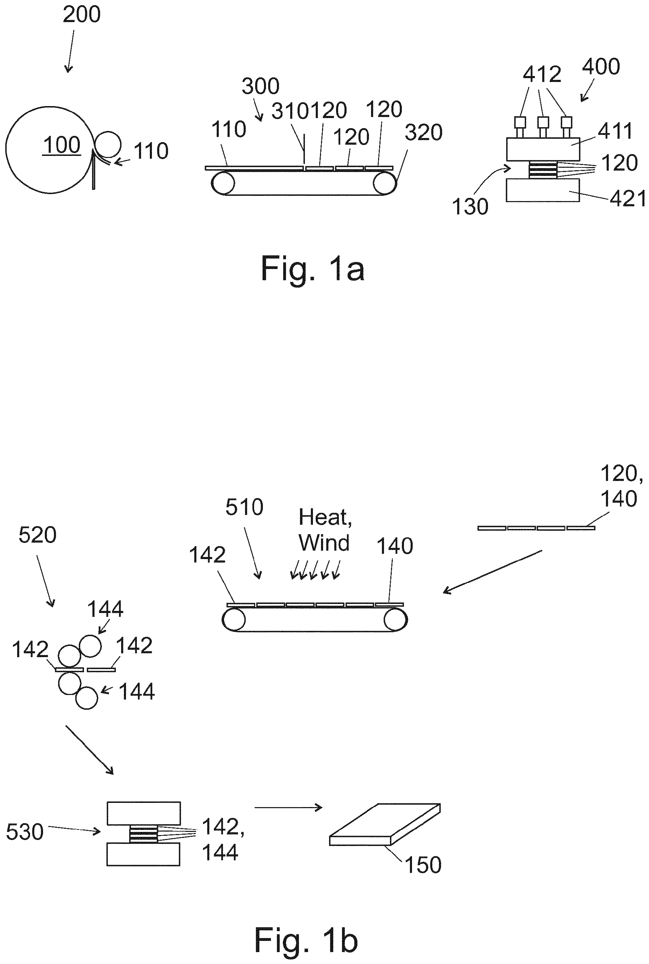

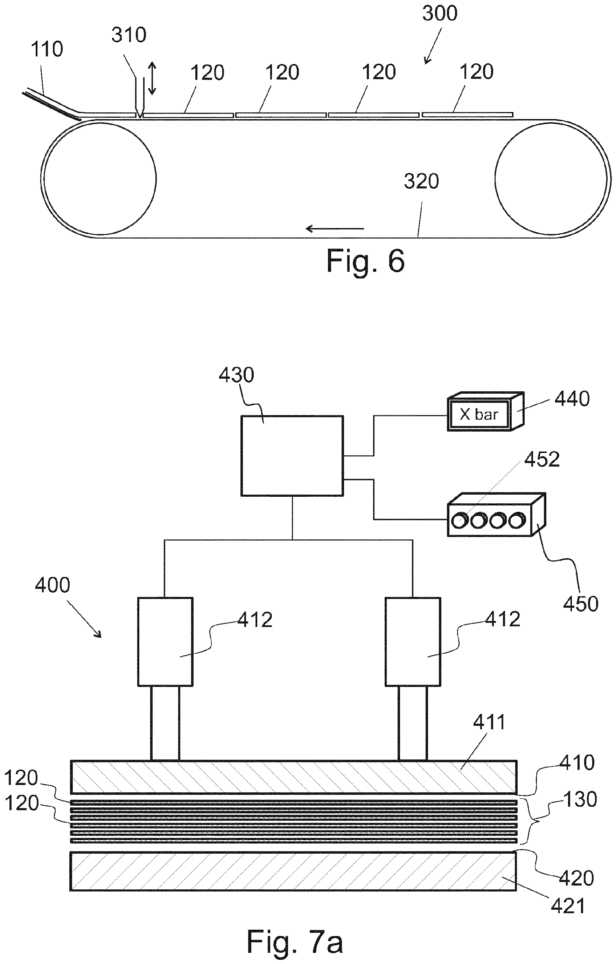

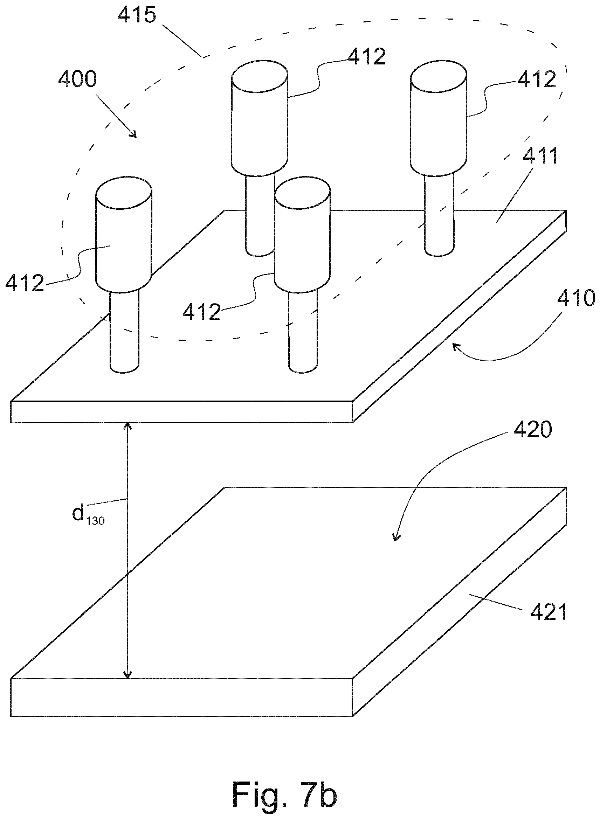

Parts of a process for manufacturing plywood is shown in Figs. 1a and 1b. Referring to Fig. 1a, after soaking, de-barking, and cutting the wood, veneer 110 is made from a wood block 100. If a rotary method is used to manufacture veneer 110, a veneer lathe 200 is used for peeling veneer 110 from a wood block 100. Thereafter, the veneer 110 is cut to veneer sheets 120 including heart wood veneer sheets and other veneer sheets. The veneers are cut in a cutting apparatus 300 having a blade 310 for cutting the veneer. Thereafter, at least some of the veneer sheets 120 are pre-dried by compression. A veneer sheet 120 is pre-dried simultaneously with some other veneers in a stack 130. Accordingly, a stack 130 of veneer sheets 120 is formed. Correspondingly, at least one of the veneer sheets 120 manufactured from the wood block 100 is arranged into the stack 130. The stack 130 may further comprise veneer sheets manufactured from another wood block or other wood blocks. Not all the veneer sheets 120 need to be pre-dried, depending on their moisture content. For example, heart wood is typically so dry, that it is dried in a drier 510 without compressive pre-drying. Thus, at least one of the veneer sheets 120 peeled from the wood block 100 is pre-dried by pressing the stack 130 of veneer sheets to dry the veneer sheets of the stack 130. The veneers of the stack 130 are pre-dried in a press 400 for pressing a stack 130 of veneer sheets 120. Referring to Fig. 1a, 7a, and 7b, the press 400 comprises a first surface 410 and a second surface 420. The first 410 and second 420 surfaces are arranged such that the stack 130 of veneer sheets can be arranged in between the first surface 410 and the second surface 420. The press 400 further comprises an actuator arrangement 415 configured to move the first surface 410 towards the second surface 420 in order to press the stack 130 of veneer sheets, which has been arranged in between the first surface 410 and the second surface 420. The actuator arrangement 415 may comprise at least one hydraulic press 412. The first surface 410 may comprise a surface of a first planar object 411. The second surface 420 may comprise a surface of a second planar object 421. The first surface 410 may be formed of surfaces of multiple first planar objects 411. The second surface 420 may be formed of surfaces of multiple second planar objects 421.

Referring to Fig. 1b, the veneer sheets 120, i.e. the pre-dried veneer sheets 140, may be used to manufacture plywood 150. For example, the pre-dried veneer sheets 140 may be further dried in an drier 510 using heat and gas circulation (i.e. wind). In this way, dry veneers 142 are obtained. Thereafter, adhesive 144 is arranged onto at least one side of at least some of the dry veneers 142. Adhesive may be applied in an applicator 520. Thereafter, a stack of dry veneers 142 and adhesive 144 is pressed, in a second press 530, to form plywood 150. The plywood 150 is typically thereafter finished, e.g. by sawing the edges and/or by coating the plywood 150.

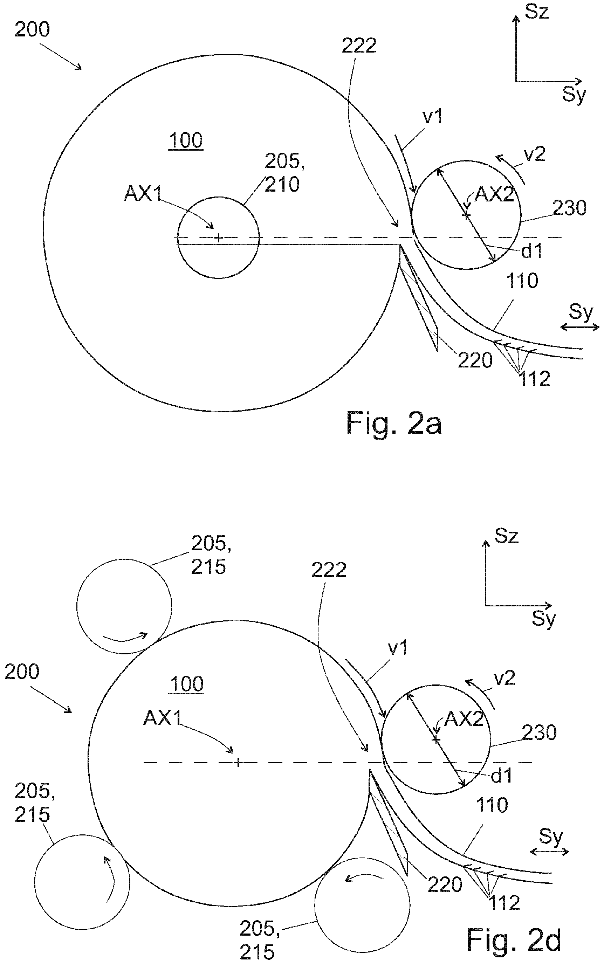

Several methods for manufacturing veneer 110 are known. Referring to Figs. 3c to 3g, veneer 110 suitable for plywood may be produced by a non-rotary method from a wood block 100. Such methods include: a method for manufacturing crown cut veneer (Fig. 3c), half-round slicing (Fig. 3d), a method for manufacturing quarter cut veneer (Fig. 3e), rift-cutting (Fig. 3f), and lengthwise cutting (Fig. 3g). Referring to Figs. 2a to 2d, 3a and 3b, veneer 110 for plywood may be produced by a rotary method by using a veneer lathe 200.

Referring to Figs. 2a to 2d and 3a and 3b, a veneer lathe 200 in general comprises a rotor 205 for rotating the wood block 100. The rotor 205 may comprise a spindle 210 (or a pair of spindles 210) for rotating the wood block 100 from an end of the wood block, as indicated in Fig. 2a. In the alternative, as indicated in Fig. 2d, the rotor 205 may comprise support rolls 215 configured to rotate the wood block 100 from such an outer surface of the wood block that has a normal parallel to the radial direction of the wood block 100. A lathe without a spindle 210 may be referred to as a spindless lathe.

The veneer lathe 200 further comprises a knife 220 for peeling veneer 110 from the wood block 100, and nose bar (230, 240) configured to press the wood block 100. The wood block 100 is configured to rotate about a first axis of rotation AX1. Typically the wood block is arranged in the lathe such that the grain orientation of the wood is parallel to the first axis of rotation. The spindle 210 (if present, or the pair of spindles 210) is configured to rotate about the first axis of rotation AX1. In such a lathe 200, an knife gap 222 is left in between the nose bar (230, 240) and the knife 220. As an alternative term for the knife gap, the term exit gap is sometimes used. In particular the knife 220 comprises an edge 221, i.e. a cutting edge 221, which is configured to peel the veneer 110 from the wood block 100. The veneer 110 is configured to exit through the knife gap 222.

Referring to Figs. 2a to 2d, and 3a, it has been found that veneer sheets 120 manufactured using a veneer lathe 200 having a roller nose bar 230 can be dried to a much greater extent by compression than veneers sheets 120 formed otherwise. Thus, an embodiment of a method for manufacturing veneers 120 comprises producing veneer 110 by peeling the wood block 100 with a veneer lathe 200 comprising a rotor 205 (such as a spindle 210 or a pair of spindles 210) for rotating the wood block 100 and a roller nose bar 230 configured to press the wood block 100 and rotate. Moreover, an embodiment of an arrangement comprises a veneer lathe 200 comprising a rotor 205 for rotating the wood block and a roller nose bar 230 configured to press the wood block 100 and rotate.

As indicated in Figs. 3c to 3g, the in non-rotatory methods a nose bar is commonly not used. However, in the rotatory methods, a nose bar 230, 240 is typically used. In contrast to a fixed nose bar 240 (see Fig. 3b), the roller nose bar 230 is configured to rotate. In particular, the roller nose bar 230 is configured to rotate in a manner independent of the knife 220. In other words, the roller nose bar 230 is configured to rotate independently of the knife 220. In other words, the roller nose bar 230 is configured to rotate with an angular velocity different from an angular velocity of the knife 220.

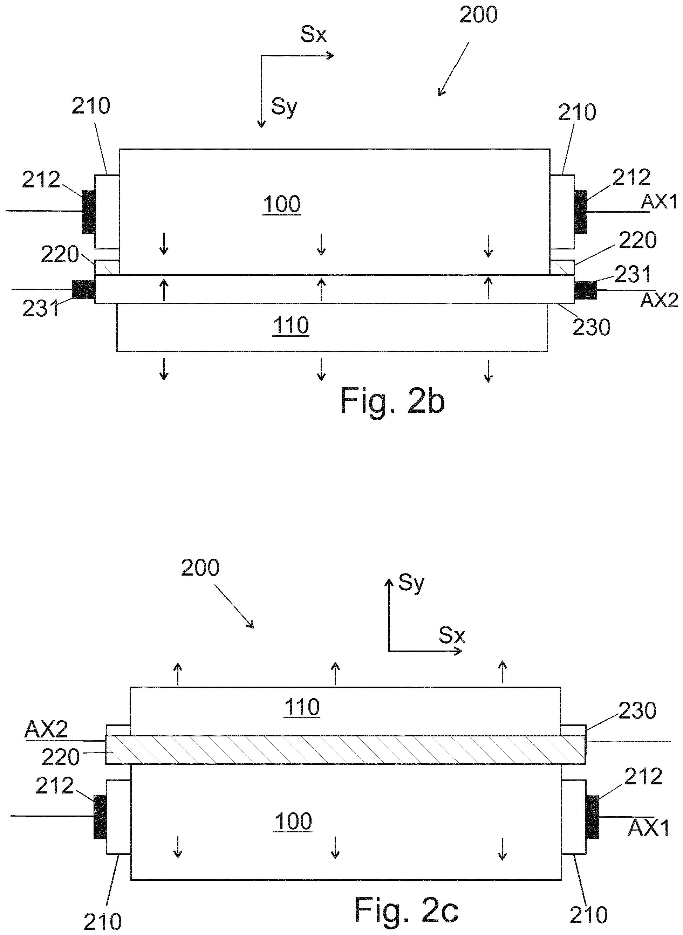

Referring to Fig. 2a, when peeling the wood block 100, the wood block 100 rotates about a first axis of rotation AX1 with a first peripheral velocity v1 and the roller nose bar 230 rotates about a second axis of rotation AX2 with a second peripheral velocity v2. The peripheral velocity (v1, v2) is, by definition, the radius of the object (wood block 100, roller nose bar 230) multiplied by an angular velocity of the object. During peeling a wood block, the wood block 100 and the roller nose bar 230 rotate such that the second peripheral velocity v2 is equal to the first peripheral velocity v1. However, when a wood block is not peeled, the roller nose bar 230 may rotate with a different peripheral velocity than the wood block. The lathe 200 may comprise first rotator 212 arranged to rotate the spindle 210. Even if two first rotators 212 are shown in Fig. 2b, one first rotator 212 may suffice, and the other end of the wood block may rotate freely. The lathe 200 may comprise a second rotator 231 arranged to rotate the roller nose bar 230. The second rotator 231 is arranged to rotate the roller nose bar 230 without rotating the knife 220. Even if two second rotators 231 are shown in Fig. 2b, one second rotator may suffice, and the other end of the roller nose bar 230 may rotate freely.

A lathe 200 with a roller nose bar 230 produces a large piece of veneer 110, whereby the veneer 110 is cut to veneer sheets 120, as indicated above.

In order to dry at least a veneer sheet 120, an embodiment of a method comprises arranging at least one of the veneer sheets 120 into a stack 130 of veneer sheets, and pressing the stack 130 of veneer sheets to dry the veneer sheets of the stack 130. Correspondingly, an embodiment of an arrangement comprises a press 400 as detailed above.

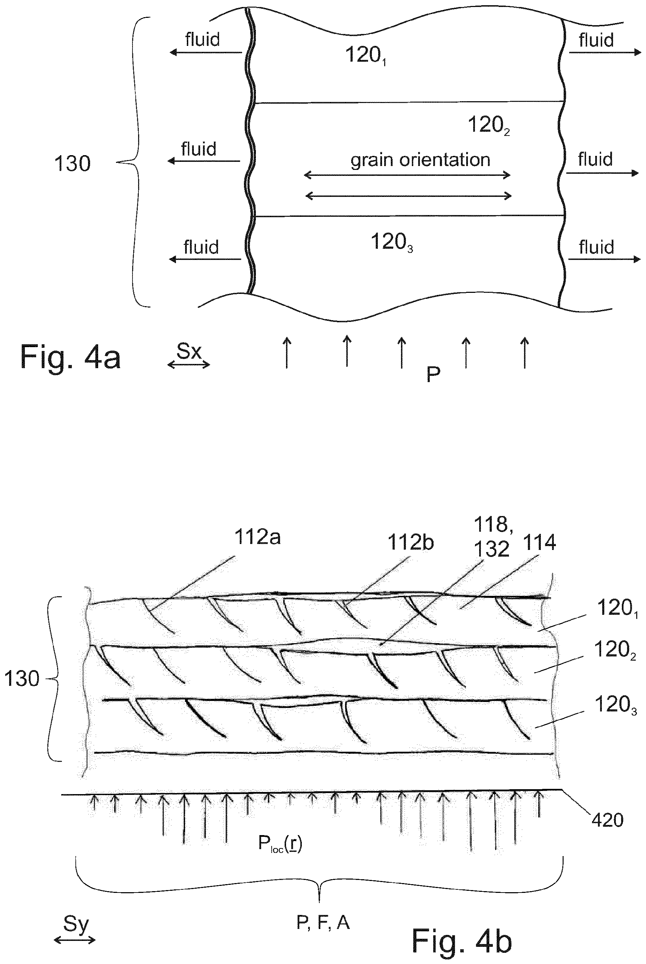

Fig. 4a shows, as a first side view, a part of a stack 130 of veneer sheets 120₁, 120₂, 120₃ under compression. The pressure generating the compression is indicated by the symbol P. As indicated in Fig. 4a, aqueous fluid is squeezed out of the veneers 120i (i = 1, 2, 3) mainly in the direction of the grains (i.e. Sx) of the veneers 120.

Fig. 4b shows, as a second side view perpendicular to the first side view of Fig. 4a, a part of a stack 130 of veneer sheets 120₁, 120₂, 120₃ under compression. As indicated in Fig. 4b, the pressing surfaces (only one pressing surface 420 is shown in Fig. 4b) impose a pressure to the stack 130 of the veneer sheets 120₁, 120₂, 120₃. In the pressing process, the total pressure P is controlled. As indicated in Fig. 4b, the pressure is not necessarily constant throughout the surface of the stack 130. Thus, the local pressure P_{loc}(r) is a function of location r. In Fig. 4b, the local pressure P(r) and its magnitude is indicated by the vertical arrows. In mechanics, it is conventional to refer to stress when the question is about internal stress (i.e. pressure) and to refer to pressure when question is about external load (i.e. distributed force, i.e. pressure).

The total pressure P is related to the compressing force by F=P×A, wherein A is the area of that surface of the stack 130 that is pressed, and F is the force applied to the surface. Moreover, the total pressure P is an average of the local pressure P_{loc}(r). The unit of pressure in this field is conventionally bar or N/mm², which equals to MPa (i.e. 1 N/mm² = 1 MPa = 10 bar).

As indicated in Fig. 4b, the veneer sheets 120 include imperfections. Imperfections include checks 112, such as checks 112b that are open on top (i.e. open checks) and checks 112a that are closed on top (i.e. closed checks). Typically, the closed checks 112a are only closed when the stack 130 is formed, and optionally the stack 130 is also compressed. A single veneer, separated from a stack, typically comprises only or at least mainly open check 112b. As detailed below, in a measurement process, wherein colouring substance is used to colour the checks, the colouring substance penetrates into such open checks 112b. Imperfections further include valleys 118 in between elevations 116. Checks 112 are commonly also referred to as cracks. In the stack 130, the valleys 118 form stack cavities 132. Despite of these imperfections, a part of a veneer 120 can be considered as integral wood substance 114.

The total compressing force F is spread as the internal stress within the stack 130. The internal stress of the stack includes stresses within the integral wood substance 114 (i.e. wood material without checks, i.e. cracks). Within the integral wood substance 114 the stress is distributed to stress of wood cell walls and stress (or pressure) in wood cell voids i.e. cell lumens. Inside the veneers 120, the cell wall stress has to be sufficiently high to cause enough volume chance in wood substance and cause internal water pressure in cell lumens. Furthermore the internal stress of the stack includes stresses in the checks 112a and 112b. Furthermore some of the stress is distributed as pressures within veneer stack cavities 132.

Compression drying has been found to be particularly efficient when there is enough difference between pressure within the cell voids (in the material 114), pressure at the checks 112, pressure at the veneer stack cavities 132, and the ambient pressure. Preferably, the pressure within the cell voids (in the material 114) is higher than the pressure at the checks 112, which is higher than the pressure at the veneer stack cavity 132, which is higher than the ambient pressure.

Compression drying has been found to be particularly efficient, when both checks 112 (in particular open checks 112b) and veneer stack cavities 132 are present. Even more preferably, in the stack 130 there is not much hydraulic resistance from middle parts of the veneer stack to vertical edges of the veneer stack. Some of those cavities become closed, when compression pressure is increased. Thus it is advantageous to use, as the drying pressure P, an pressure P of from 1 MPa to 5 MPa depending on the wood material and its density, to make sure that there is enough open cavities 112b.

It has been observed that especially by peeling using lathe 200 having a roller nose bar 230, it is possible to obtain veneer and veneer stack structure consisting proper continuous cavities 132 to make efficient and fast compression drying possible. By peeling with a lathe having a roller nose bar it is possible to produce proper peeling checks 112, enough variation in surface profile of the veneer, and the form of variation is such that continuous cavities are formed.

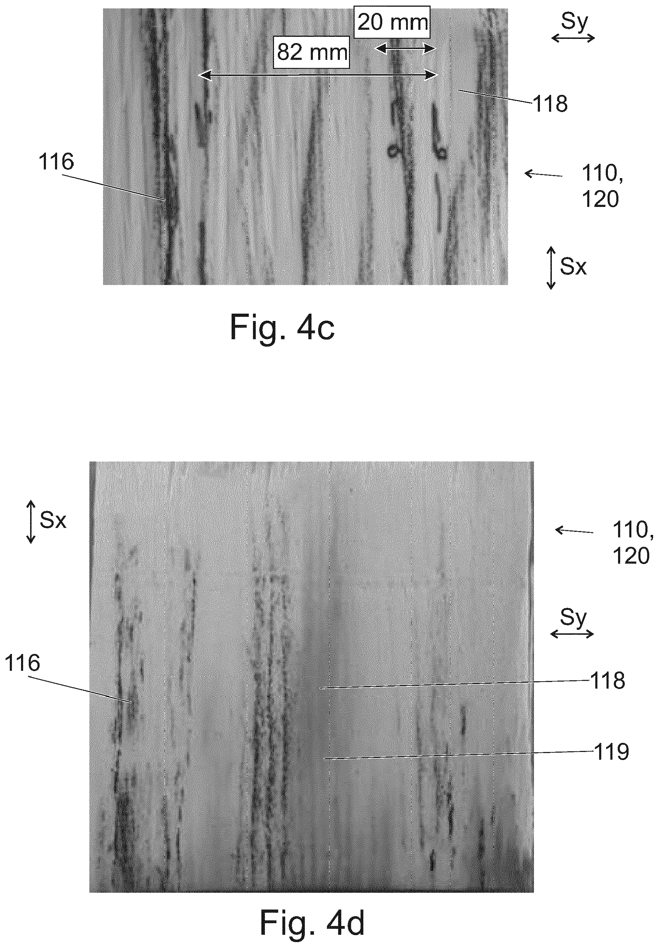

As for the variation in surface profile of veneer, Fig. 4c shows a veneer 110 manufactured using a lathe 200 with a roller nose bar 230. The figure shows dark areas 116 and light areas 118. The dark areas are the result of colouring the veneer 110 with a planar part of a crayon. Thus, the dark areas correspond to elevations 116 in the veneer 110. Correspondingly, the light areas 118 correspond to valleys 118 in between the elevations 116. In a direction Sy that is perpendicular to the thickness of the veneer and to the grain direction, an average distance (i.e. spacing) between the elevations 116 is typically from 15 mm to 30 mm. The roughness of the surface is measured as described in the standard ISO 4288:1996 using a measuring tip with a radius rₜᵢₚ of 2 mm and from a sampling length lᵣᵢ 20 mm. As indicated in the figure 4c, the sampling length and the direction in which the measurements are made is, in an embodiment, perpendicular to the grain direction. Moreover, in an embodiment, the greatest height of the roughness profile, Rz, as measured from a bottom of a deepest valley to a top of a highest elevation is from 0.2 mm to 0.5 mm. The depth Rv of a deepest valley, as measured from an average surface level of the surface of the veneer, was in the range of from 0.1 mm to 0.35 mm.

As an average roughness value, the roughness average Ra of a surface of the veneer 110 may be e.g. from 0.04 mm to 0.3 mm, or from 0.05 mm to 0.2 mm, when the roughness is measured as indicated in the standard ISO 4288:1996 along the direction Sy, as defined above from a sampling length lᵣᵢ of 20 mm and using a measuring tip having a radius rₜᵢₚ of 2 mm. At least such variations from the planarity of a surface of the veneer 110 seem to be sufficient from the point of view of compression drying. It is also noted that surface of veneer produced with a lathe having a fixed nose bar is typically much more even. Surface roughness of several such veneers were also measured, and the Ra surface roughness was only from 0.02 mm to 0.03 mm as measured with the same method and equipment. Reasons for this difference will be discussed below.

Moreover, wetting of such a veneer was studied by arranging an edge of the veneer 110 to a bath of coloured water. The edge had a surface normal parallel to a grain direction of the veneer. As indicated in Fig. 4d, the elevations 116 were not further coloured by the coloured water, indicating that water absorption in those regimes in small or negligible. However, as indicated by the reference numeral 119, a lot of the coloured water was absorbed in the valleys 118. Thus, it seems that the valleys 118 provide for channels for water to flow. It also seems that during compression, the aqueous solution is squeezed out of the veneer 110 at least through such valleys 118. Thus, the presence of the valleys seems beneficial from the point of view of compression drying.

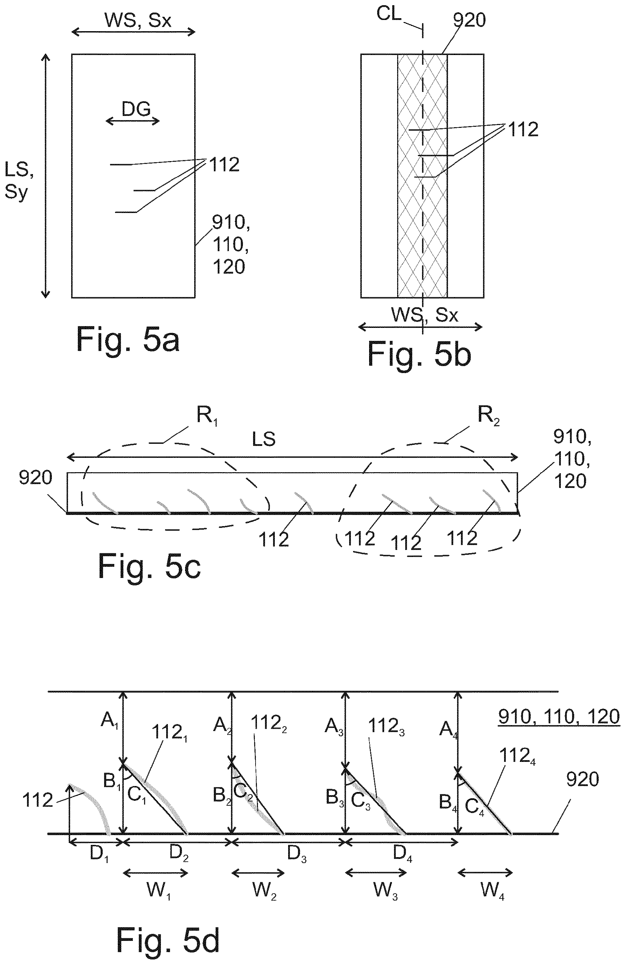

As indicated above, it seems that the peeling checks 112 provide for additional channels for the aqueous solution to flow during compression. To test this, first, two types of veneers 110 having different checks 112 were produced. As for characterizing the quality and/or amount of peeling checks 112, the checks 112 were measured. Figures 5a to 5d indicate measurement of properties of the checks 112.

The amount and quality of peeling checks 112 from a veneer 110 or a veneer sample 910 is measured by applying textile colouring solution onto the veneer 110 (or veneer sheet 120 or veneer sample 910), cutting an edge of the veneer 110, 910 to expose the colouring of the checks of the veneer, and observing the cut edge. As the colouring solution, diluted colouring substance is used. In an embodiment, Dylon^{®} Tulip Red is used as the colouring substance, even if also other colouring solutions, preferably water soluble colouring substances, could be used. However, the purpose of the colouring substance is only to make the check visual, whereby the any suitably dark textile colouring substance may be used. Textile colouring substances, when diluted, have sufficiently low viscosity for filling the checks 112. The colouring solution is diluted as indicated below.

Referring to Fig. 5a the test is performed to test samples 910 of veneer 110 having a length LS of 150 mm and width WS of 50 mm, wherein the width WS of the sample is directed in the grain direction DG of the sample 910 of veneer 110. Such a sample 910 may be cut from a veneer 110 or veneer sheet 120, or the veneer 110 or the veneer sheet 120 may be otherwise of proper size.

The textile colouring substance is mixed with water in a ratio of 1 g of colouring substance per 10 ml of water in order to form the colouring solution. Typically this amount is sufficient for colouring at least two test samples 910.

An amount of 1.75 ml ± 0.25 ml of the colouring solution is spread onto the sample to form a 20 mm wide coloured stripe 920 extending throughout the whole length of the test sample 910 as indicated in Fig. 5b. A suitable dispenser and/or brush may be used for the purpose.

The sample 910 with the stripe 920 is let dry for an hour at room temperature (T = 23°C) in regularly dry air (relative humidity approximately 60 %RH). The sample 910 is dried so that it feels dry. After drying the test sample 910, the sample 910 is cut lengthwise in the middle of the aforementioned stripe 920. A cutting line CL is shown as a dotted line in Fig. 5b.

The cut edge of the sample 910 is observed visually using a microscope. Fig 5c illustrates a cut edge of the sample showing peeling checks 112. Fig 5c also shows the stripe 920 on a surface of the veneer sample 910.

Fig. 5d illustrates measures of the peeling checks 112. The figure indicates in detail four checks 112₁, 112₂, 112₃, and 112₄. For each check 112i, (i = 1, 2, 3, or 4) four parameters are measured:
- A (i.e. Aᵢ for the check 112i, e.g. A₁ for the check 112₁, A₂ for the check 112₂, etc.), which is the thickness of the remaining sample, to which the check 112i has not propagated,
- B (i.e. Bᵢ for the check 112i, e.g. B₁ for the check 112₁, B₂ for the check 112₂, etc.), which is the depth of the check 112ᵢ, as measured parallel to the thickness of the veneer sample 910,
- C (i.e. Cᵢ for the check 112i, e.g. Cᵢ for the check 112₁, C₂ for the check 112₂, etc.), which is the average angle of penetration of the check 112i,
- D (i.e. Dᵢ for the check 112i, e.g. D₁ for the check 112₁, D₂ for the check 112₂, etc.), which is the distance between the check 112i and a neighbouring check 112ᵢ₋₁, wherein the neighbouring check 112ᵢ₋₁ is the next check in the planar direction of propagation of the check 112i, wherein the planar direction of propagation is a direction of the plane of the sample 910, 110, 120 and directed from the surface of the stripe 920 to an end of the check 112i in the cut edge (see Fig. 5d).

As for the measuring the angle Cᵢ, the angle Cᵢ is defined by inverse tangent of the ratio Wᵢ/Bᵢ, wherein Wᵢ is the width of the check 112i in the planar direction of propagation of the check 112i, wherein the planar direction of propagation is a direction of the plane of the sample 910 and directed from the surface of the stripe 920 to an end of the check 112i in the cut edge (see Fig. 5d).

To test the effect of a roller nose bar 230 used in the veneer lathe 200 on the quality of the veneers 120 to be dried, veneers 120 were produced by [i] using a lathe 200 with a roller nose bar 230 (cf. Fig. 3a) and [ii] using a lathe 200 with a fixed nose bar 240 (cf. Fig. 3b). It is also noted that the non-rotatory methods shown in Figs. 3c to 3g typically produce veneer 110 with even less peeling checks 112, since the veneer 110 in those methods need not to bend after peeling. Thus, for comparative purposes, a veneer that could be anticipated to have also a lot of checks 112, was chosen.

Samples from ten veneer sheets 120 produced by using a lathe 200 with a roller nose bar 230 were produced; and the check dimensions were measured as indicated above. In addition samples from ten veneer sheets 120 produced by using a lathe 200 with a fixed nose bar 240 were produced; and the check dimensions were measured as indicated above. Referring to Fig. 5c, veneer 110 can be cut to veneer sheets 120, whereby veneer 110 comprises multiple regions Rₖ, of which the regions R₁ and R₂ are shown in Fig. 5c. Even if not shown in the figures, the different regions correspond to parts of different veneer samples 910 (for their size, see above). However, multiple samples 910 may be formed from one veneer. Each sample k of Table 1 corresponds to a region Rₖ of veneer 110 (herein k = 1, 2, 3, ..., 10). The region may be a part of the aforementioned sample. In an embodiment, each region has a length of 20 mm in a direction that is perpendicular to the grain direction. Moreover, the regions do not overlap, i.e. comprise same points of the veneer.

The depth of the checks were measured as a proportional depth, i.e. as the ratio Bi/(Ai+Bi) for each check 112ᵢ. In table 1, the average of the proportional depth is denoted by <Bᵢ/(Aᵢ+Bᵢ)>. The distance Dᵢ between a check 112i and a neighbouring check 112ᵢ₋₁ was also measured. Moreover, in some parts of this text, the distance is denoted by D_{i,k}, wherein k denotes the number of the sample (i.e. region) from which the checks are measured. A practice, an average distance <Dᵢ> (or <Dᵢ>ₖ) was determined by dividing the length of the observed part of the veneer 110, 120, 910 (typically 20 mm) by the number of checks within the observed part. In table 1, the average of the distances Dᵢ is denoted by <Dᵢ>ₖ, since the average distance <Dᵢ>ₖ varies from sample to sample. The average (AVE), standard deviation (STD), minimum (MIN) and maximum (MAX) of the average distances <D_{i,k}> are also shown in Table 1. The veneers of Table 1 had a thickness of 2.7 mm.

**Table 1: Check depth and average distance between two neighbouring checks for veneers produced using a lathe having a fixed nose bar and for veneers produced using a lathe having a roller nose bar.**

| **Sample, k** | **Fixed nose bar** | | **Roller nose bar** | |
|---|---|---|---|---|
| | **Checking depth (%)** | **Average interval between two checks, <Dᵢ>ₖ (mm)** | **Checking depth (%)** | **Average interval between two checks, <Dᵢ>ₖ (mm)** |
| **1** | **50** | **2,0** | **65** | **2,5** |
| **2** | **45** | **2,5** | **70** | **1,8** |
| **3** | **55** | **1,8** | **65** | **2,0** |
| **4** | **60** | **1,5** | **75** | **2,2** |
| **5** | **60** | **2,0** | **70** | **1,5** |
| **6** | **55** | **1,8** | **75** | **2,5** |
| **7** | **35** | **1,5** | **70** | **2,0** |
| **s** | **45** | **3,3** | **65** | **2,2** |
| **9** | **45** | **1,4** | **65** | **2,2** |
| **10** | **50** | **2,0** | **70** | **1,4** |
| **AVE** | **50** | **2,0** | **70** | **2,0** |
| **STD** | | **0,56** | | **0,37** |
| **MIN** | | **1,4** | | **1,4** |
| **MAX** | | **3,3** | | **2,5** |

As indicated in Table 1, the average depth of the checks 112 is much greater when a lathe 200 with a roller nose bar 230 is used.

To test the effect of the checks 112 and/or the use a roller nose bar 230 on the drying by pressing the veneers, stacks 130 of veneer sheets 120 were pressed. Some primary stacks, wherein in the veneers were peeled using a lathe having a roller nose bar 230 were pressed. Moreover, some secondary stacks, wherein in the veneers were peeled using a lathe having a fixed nose bar 240 were pressed. In both cases, pressing was performed by first pressing the stack of veneer sheets with a pressure of 16 bar for 100 s. Thereafter the stack of veneer sheets was pressed with a pressure of 20 bar for 210 s. Finally, the stack of veneer sheets was pressed with a pressure of 22 bar for 290 s. Such a pressure profile resembles a pressure profile that is anticipated to function well also in the production of plywood. The stack that was compressed comprised five or ten veneers. The results are shown in Table 2a for veneers peeled with a lathe having a roller nose bar; and in Table 2b for veneers peeled with a lathe having a fixed nose bar.

**Table 2a: Drying of spruce veneers by compression. Veneers are made by peeling with a lathe have a roller nose bar.**

| Roller nose bar, primary stack | | | | | | |
|---|---|---|---|---|---|---|
| Number of veneers in stack | Average density before pressing, kg/m³ | Moisture content before pressing, % | Total mass before pressing, M1_{T}, g | Total mass after pressing, M2_{T}, g | Mass of aqueous liquid, % | Mass of remaining veneer M2_{T}/M1_{T}, % |
| 5 | 685 | 49 | 2947 | 2254 | 24 | 76 |
| 5 | 908 | 185 | 3137 | 2016 | 36 | 64 |
| 10 | 908 | 185 | 6427 | 4428 | 31 | 69 |
| 5 | 925 | 150 | 3157 | 2353 | 25 | 75 |
| 5 | 828 | 125 | 3060 | 2504 | is | 82 |
| 5 | 920 | 106 | 2650 | 2171 | 18 | 82 |
| 10 | 920 | 106 | 5335 | 4614 | 14 | 86 |
| 5 | 908 | 157 | 2743 | 2214 | 19 | 81 |
| 5 | 1011 | 146 | 3427 | 2743 | 20 | 80 |
| 5 | 972 | 131 | 3483 | 2604 | 25 | 75 |
| | | | | Average | 23 | 77 |
| Statistics for samples having density from 850 to 1000 kg/m³ | | | | | | |
| | | | | Average | 24 | 76 |
| | | | | Minimum | 14 | 64 |
| | | | | Maximum | 36 | 86 |

**Table 2b: Drying of spruce veneers by compression. Veneers are made by peeling with a lathe have a fixed nose bar.**

| Fixed nose bar, secondary stack | | | | | | |
|---|---|---|---|---|---|---|
| Number of veneers in stack | Average density before pressing, kg/m³ | Moisture content before pressing, % | Total mass before pressing, M1_{T}, g | Total mass after pressing, M2_{T}, g | Mass of aqueous liquid, % | Mass of remainin g veneer M2_{T}/M1_{T}, % |
| 5 | 954 | 128 | 3438 | 2995 | 13 | 87 |
| 10 | 954 | 128 | 6642 | 5935 | 11 | 89 |
| 5 | 852 | 77 | 3242 | 2902 | 10 | 90 |
| 10 | 852 | 77 | 6245 | 5623 | 10 | 90 |
| 5 | 813 | 157 | 2796 | 2483 | 11 | 89 |
| 10 | 813 | 157 | 6415 | 5305 | 17 | 83 |
| 5 | 819 | 124 | 3209 | 2672 | 17 | 83 |
| 10 | 819 | 124 | 6109 | 5143 | 16 | 84 |
| 5 | 871 | 96 | 3242 | 2565 | 21 | 79 |
| 10 | 871 | 96 | 6282 | 5109 | 19 | 81 |
| | | | | Average | 14 | 86 |
| Statistics for samples having density from 850 to 1000 kg/m³ | | | | | | |
| | | | | Average | 14 | 86 |
| | | | | Minimum | 10 | 79 |
| | | | | Maximum | 21 | 90 |

For the primary stacks, veneers were peeled with a veneer lathe comprising a roller nose bar 230 (see Fig. 3a). Typically, the moisture content (i.e. content of water in grams divided by dry mass in grams) was from 100 % to 160 %. On the average, the mass reduction of the veneers of the primary stacks during pressing was 23 %.

For comparison, veneers were peeled with a veneer lathe comprising a fixed nose bar 240 (see Fig. 3b). Typically, the moisture content (i.e. content of water in grams divided by dry mass in grams) was from 100 % to 160 %. On the average, the mass reduction of the veneers of the secondary stacks during pressing was 14 %.

Thus, already from these numbers it seems that compressive drying was much more efficient for the veneers manufactured with a lathe having a roller nose bar 230.

In principle, some of the difference could be due to a different initial moisture content. However, the mass reduction of veneers having an initial moisture content of about 130 % was about 22 %, when a roller nose bar 230 was used. In contrast, the mass reduction of veneers having an initial moisture content of about 130 % was about 14 %, when a fixed nose bar 240 was used. This confirms that compressive drying was much more efficient for the veneers manufactured with a lathe having a roller nose bar 230.

In terms of initial density, i.e. density before pressing the veneers, the density being indicative of moisture content, for veneers having the density from 850 kg/m³ to 1000 kg/m³ and having been made using a lathe with a roller nose bar 230, from 14 to 36 wt-% of aqueous liquid was squeezed out from the veneers. In contrast, for veneers having the density from 850 kg/m³ to 1000 kg/m³ and having been made using a lathe with a fixed nose bar 240, from 10 to 21 wt-% of aqueous liquid was squeezed out from the veneers.

The veneers of table 2 were made from spruce. Before compressing the stack 130, the veneers 120 are wet, whereby their density is significantly higher than after drying. For example, when veneers 120 of spruce are dried, the density of at least some of the wet veneers 120, before the compressive drying, may be in the range from 850 kg/m³ to 1000 kg/m³. The mass of the veneer 120 before compression is denoted by m1. When the veneers 120 of the stack 130 are compressed, aqueous liquid is squeezed out from the veneer 120. Thus, the mass of the veneers 120 is reduced. The mass of the veneer 120 after compression is denoted by m2. In an embodiment, the stack 130 is pressed in such a way that the second mass m2 is at most 75 % or at most 70 % of the first mass m1.

As indicated in Table 2a, such values have been found applicable also to more than one veneer in the average. However, for the average value, the mass reduction may be slightly less. An embodiment comprises forming ten veneer sheets 120 from spruce (from one or more wood blocks 100) with a veneer lathe 200 having a roller nose bar 230; and arranging the veneer sheets 120 to a stack 130. In the embodiment, such wet spruce is peeled that the average density of the ten veneers 120 before pressing the stack 130 is from 850 kg/m³ to 1000 kg/m³. A first total mass of the ten veneer sheets 120 before pressing is m1_{T}. In the embodiment, the stack 130 is pressed in such a way that the ten veneer sheets 120, after pressing, have a second total mass m2_{T}, wherein the second total mass m2_{T} is at most 80 %, at most 75 %, or at most 72 % of the first total mass m1_{T}. It is noted, than in table 2a, for the primary stacks of five or ten veneers, this ratio ranges from 64 % to 86 %; while for the secondary stacks of five or ten veneers (table 2b), this ratio ranges from 79 % to 90 %.

These results indicate that pressing dries the veneer sheets that are peeled with a lathe comprising a roller nose bar 230 much better than the veneer sheets that are peeled with a lathe comprising a fixed nose bar 240. As indicated above, it seems that this effect is at least partly due to the checks 112 and the valleys 118 of the veneers. Moreover, since the non-rotatory methods of Figs. 3c to 3g most likely produce even less checks 112 and valleys 118, it seems that compression drying for such veneers would be even worse.

As seen from Table 1, the check depth is greater in veneer 110 produced using a lathe with a roller nose bar 230. It seems that the such deeper checks 112 provide for more fluid channels within the veneers to enable drying by compression. Consequently, as indicated above, veneers produced using a lathe having a roller nose bar 230 dried more than veneers produced using a lathe having a fixed nose bar 240.

Moreover, even if the average distance between neighbouring checks was about 2 mm in both tests of Table 1, it is noted that the standard deviation of the distances between neighbouring checks was smaller when the veneers were produced using a lathe having a roller nose bar 230. For example, In table 1, the standard deviation of the average distances <Dᵢ>ₖ from ten samples was 0.56 mm when a fixed nose bar was used and 0.37 mm when a roller nose bar was used. Given that the average of the average distances <Dᵢ>ₖ was 2.0 mm, when a roller nose bar was used, the standard deviation of the average distances was less than 25 %, and even less than 20 %, of the average of the average distances. The average of the averages may be denoted e.g. by <<Dᵢ>ₖ>. A smaller deviation implies that the checks 112 are more evenly distributed in the veneer 120. Therefore, drying by compression takes place in a more even manner in case the veneers are produced using a lathe having a roller nose bar 230. This not only increases drying, but also makes the moisture content of the pre-dried veneers (i.e. veneer dried only by compression) more even. The final drying step (e.g. by hot air) is therefore easier to control in such a way that the veneers do not dry too much.

Fig. 2a shows the lathe 200 in a side view. The direction Sz refers to upward vertical direction. The directions Sx and Sy refer to horizontal directions. The directions Sx and Sz are perpendicular. The direction Sz is perpendicular to both Sx and Sy. The direction Sx is also used to denote a grain orientation of the veneer 110 or veneer sheet 120, when the veneer 110 and/or the veneer sheets is/are oriented horizontally. Correspondingly, the direction Sx is parallel to the first axis of rotation AX1. Thus, when the veneer 110 and/or the veneer sheets is oriented horizontally, the direction Sy is perpendicular to the thickness of the veneer 110 and to the grain orientation. As indicated in Fig. 2a (and 3a and 3b), when a veneer lathe 200 is used, the wood block 100 surrounds the first axis of rotation AX1. Thus, the veneer 110 would naturally bend about the first axis of rotation AX1. However, in the lathe 200, the veneer 110 is bent in the opposite direction. Because of this bending, checks 112 are formed into the veneer 110. They are formed typically on the lower side of the veneer 110 as indicated in Fig. 2a.

The formation of checks 112 may also be somewhat dependent of other process details. Preferably, the wood block 100 is peeled such that the first peripheral velocity v1 is from 75 m/min to 400 m/min. As indicated above, during peeling, the second peripheral velocity v2 equals the first peripheral velocity v1. Typically, before peeling, i.e. when the wood block is rotated, but the knife is not used to form veneer, the second peripheral velocity is slightly more than the first peripheral velocity. At that time, the second peripheral velocity may be e.g. up to 20 % higher than the first peripheral velocity. It has been noticed, that peeling with a large peripheral velocity produced more peeling checks that peeling with a lower peripheral velocity. Thus, from the point of view of compressive drying, a peripheral velocity from the higher end is used. In an embodiment, the wood block 100 is peeled such that the first peripheral velocity v1 is from 100 m/min to 400 m/min; or from 150 m/min to 350 m/min.

Referring to Figs. 2b and 2c, in an embodiment, the lathe 200 comprises a first rotator 212 configured to rotate the wood block 100 (and the spindle 210, if present) with such a first angular velocity that the peripheral velocity of the wood block is within the aforementioned limits. In an embodiment, the lathe 200 comprises a second rotator 231 configured to rotate the roller nose bar 230 with such a second angular velocity that the peripheral velocity of the roller nose bar is within the aforementioned limits. A diameter of a typical wood block is from 4 cm to 50 cm, and decreases during peeling. More precisely, a wood block is typically peeled until the diameter of the remaining wood block (i.e. core) is about 40 mm.

Typically, the peripheral velocity v1 is constant while peeling the wood block 100. The peripheral velocity v1 may be e.g. constant and within the limits given above. Correspondingly, the angular velocity of the wood block (and spindle 210, if present) increases during peeling. For a wood block having a diameter 15 cm, whereby the cutting edge 221 of the knife 220 is arranged 75 mm apart from the first axis of rotation AX1, the angular velocity of the wood block (and spindle, if present) may be e.g. from 1000 rad/min to 5500 rad/min, i.e. from 160 rpm to 850 rpm. Herein rpm stands for revolutions per minute, i.e. 2×π radiands (rad) per minute. Considering the aforementioned minimum peripheral speed (75 m/min) for a large wood block (diameter 50 cm), a lower limit for the angular velocity is about 50 rpm. Considering the aforementioned maximum peripheral speed (400 m/min) for a small wood block (diameter 4 cm), an upper limit for the angular velocity is about 3200 rpm. Thus, the rotor 205 may be configured to rotate the wood block 100 with an angular velocity of from 300 rad/min to 20000 rad/min. It is also possible to have a constant angular velocity for the wood block, whereby the first peripheral velocity v1 would decrease while the radius of the wood block decreases during peeling.

In an embodiment, the first rotator 212 is configured to rotate the spindle 210 with an angular velocity of from 300 rad/min to 20000 rad/min.

In an embodiment, a diameter d1 of the roller nose bar 230 is from 50 mm to 100 mm, such as from 65 mm to 90 mm. The roller nose bar 230 is configured to rotate about a second axis of rotation AX2, which is parallel to the first axis of rotation AX1. The roller nose bar 230 is configured to rotate with the same peripheral speed v2 as the wood block 100. From the value given above, the roller nose bar 230 may be configured to rotate with an angular velocity of from 240 rpm to 2600 rpm, such as from 300 rpm to 1700 rpm (for a nose bar diameter of 75 mm).

Figure 2b is a top view of the lathe of Fig. 2a, whereby most of the knife 220 remains behind the wood block 100 or the roller nose bar 230. Figure 2c is a bottom view of the lathe of Fig. 2a, whereby most of the roller nose bar 230 remains behind the knife 220. The arrows in Figs. 2b and 2c indicate direction of rotation and the direction of the veneer as coming out from the lathe 200.

Fig. 3a shows peeling a wood block 100 in more detail. Typically the lathe 200 comprises a pressure head 232, which is configured to press the roller nose bar 230 against the wood block 100. The knife gap 222 is left in between the cylindrical roller nose bar 230 and the knife 220. In particular, the knife 222 comprises a first surface 224 that faces the roller nose bar 230. The first surface 224 may be planar or comprise a planar part. The knife gap 222 is left in between [a] the first surface 224 or the planar part of the first surface 224 and [b] that part of the roller nose bar 230 of which tangent surface is parallel to the first surface 224 or the planar part thereof. The dotted lines of Fig. 3a indicate the direction of the planar first surface 224 and the aforementioned tangent surface of the roller nose bar 230. As indicated in the figure, the width GW of the knife gap 222 is parallel to a normal of the first surface 224 or the planar part thereof. Thus, and also in a more general situation, the width GW of the gap is a minimum distance between the first surface 224 of the knife and the surface of the roller nose bar 230.

It has been found that from the point of view of forming the valleys 118 and/or the checks 112, the roller nose bar 230 should be pressed against the wood block 100. Moreover, it has been found, that the mutual location of the roller nose bar 230 and the edge 221 of the knife 220 affect the formation of the valleys 118 and/or the checks 112 into the veneer. The edge 221 of the knife 220 refers to that edge of the knife that is configured to separate the veneer 110 from the wood block 100 (or the rest of the wood block 100) as indicated in Fig. 3a. In an embodiment of the method or the arrangement, the edge 221 of the knife 220 is arranged at a height ΔH apart from a plane P1 comprising the first axis AX1 of rotation and the second axis AX2 of rotation. Moreover, the knife 220 is arranged such that it does not penetrate the plane P1.

Because the wood block 100 and the roller nose bar 230 takes up most space on the plane P1, most compression within the wood block 100 occurs at this plane P1. It seems that as the knife 220 (or the edge 221 thereof) peels the veneer 110 from the wood block, a crack starts to propagate from the edge of the knife more or less towards the plane P1. However, because of the compression formed by the roller nose bar 230 within the plane P1, the compressive pressure prevents the crack from propagating through the plane. The precise direction of the crack is determined, among other things, by the internal structure of wood, and is, therefore, somewhat random. Therefore, it seems the propagation of such a crack for only such distances forms the aforementioned valleys 116 and elevations 118 to the surface of the veneer 110. This phenomenon can be controlled e.g. by the distance ΔH between the edge 221 of the knife 220 and the plane P1.

In an embodiment, the height ΔH is at least 5 % of a diameter d1 of the roller nose bar 230. In an embodiment, a diameter d1 of the roller nose bar 230 is at least 50 mm and the height ΔH is at least 5 mm. In an embodiment, a diameter d1 of the roller nose bar 230 is at least 60 mm and the height ΔH is at least 8 mm.

In an embodiment, the height ΔH is at most 20 % of a diameter d1 of the roller nose bar 230. In an embodiment, a diameter d1 of the roller nose bar 230 is at most 150 mm and the height ΔH is at most 30 mm. In an embodiment, a diameter d1 of the roller nose bar 230 is at most 90 mm and the height ΔH is at most 20 mm.

Referring still to Fig. 3a, in a preferable embodiment, the veneer 110 has space for being peeled from the wood block 100 in such a way that such a crack can propagate within the wood block. In order to facilitate the aforementioned crack propagation and to ensure proper surface roughness of the veneer 110, in an embodiment, the width GW of the gap 222 if greater than the thickness t1 of the veneer 110. The width GW has been defined above and indicated in Fig. 3a. The thickness t1 of the veneer 110 may be measured e.g. at least one meter away from the knife gap 222. The thickness t1 of the veneer may be e.g. at least 1 % or at least 2 % less than the width GW of the knife gap 222. As an absolute value, the width GW of the knife gap 222 may be e.g. less than 25 mm or less than 10 mm, such as less than 6 mm.

Unlike the non-rotatory methods for manufacturing veneer, a veneer lathe 200 produces large veneer pieces. Referring to Fig. 6, after peeling the veneer 110 with a lathe 200, the veneer 110 is transferred to a cutting apparatus 300. The cutting apparatus 300 comprises a conveyor 320 and a blade 310. The cutting apparatus is configured to cut the veneer 110 to veneer sheets 120 with the blade 310. The conveyor 320 is used to transfer veneer 110 to the blade and veneer sheets 120 from the blade.

Referring to Fig. 7a, thereafter, at least one of the veneer sheets 120 is arranged into a stack 130 of veneer sheets. Moreover, the stack is arranged in between two pressing surfaces 410, 420 of a press 400. An embodiment of the method comprises arranging at least twenty or at least hundred veneer sheets to the stack 130 of veneer sheets and pressing the stack 130 to dry the veneer sheets. In an embodiment of the arrangement, the press 400 is configured to receive a stack 130 of at least twenty or at least hundred veneer sheets 120 in between the first surface 410 and the second surface 420. Typically, the thickness of a veneer is from 1 mm to 5 mm. Therefore, in an embodiment, the first surface 410 is movable relative to the second surface 420 to such a position that the surfaces 410, 420 are parallel, a surface normal of the first surface is directed towards the second surface, and a distance d₁₃₀ from the first surface 410 in the direction of the normal of the first surface to the second surface 420 is at least 700 mm; preferably at least 1000 mm.

In an embodiment, also veneer sheets from another wood block or other wood blocks are arranged in the same stack 130 together with the veneer sheet 120 from the wood block 100. In an embodiment, the stack 130 of veneer sheets is formed such that the stack 130 comprises only such veneer sheets that have been peeled from a wood block or wood blocks with a veneer lathe 200 comprising a roller nose bar 230 as detailed above.

By using the press 400, the stack 130 is pressed with a pressure P to dry the veneers 120. In an embodiment, the pressure P is at least 13 bar. The pressure refers to the compressing force F as divided by the area A of the stack's surface that is pressed. The pressure P need not to be constant temporally. As indicated above the pressure P is distributed as a local pressure Pl_{oc}(r), which needs not be constant spatially. In an embodiment, the pressure P is from 13 bar to 100 bar at least at some point of time. In an embodiment, the pressure P does not exceed 100 bar at any point of time.

In an embodiment,
- the stack 130 of veneer sheets is pressed with a first pressure of 5 bar - 18 bar for 60 s - 240 s, thereafter
- the stack of veneer sheets is pressed with a second pressure of 15 bar - 22 bar for 60 s - 300 s, and thereafter
- the stack of veneer sheets is pressed with a pressure of 20 bar - 25 bar for 60 s - 600 s.

In an embodiment, the stack 130 is pressed only for a period of time that is less than an hour or less than 30 minutes. This improves the process efficiency.

As a specific example, in an embodiment the stack is only pressed for 10 minutes such that
- the stack 130 of veneer sheets is first pressed with a pressure of 16 bar for 100 s, thereafter
- the stack of veneer sheets is pressed with a pressure of 20 bar for 210 s, and thereafter
- the stack of veneer sheets is pressed with a pressure of 22 bar for 290 s.

These values of time and pressure have been found to be particularly suitable for softwood, such as spruce. In an embodiment of the method, the wood block 100 is a block of softwood, such as spruce. As is conventional, the term softwood refers to wood from coniferous trees, such as spruce, pine, fir, and hemlock. When softwood is pressed, in an embodiment according to the invention, the pressure P does not exceed 40 bar at any point of time. This has been found sufficient, in particular, when such veneer sheets 120 are pressed that they comprise a proper amount of proper checks 112 and/or proper valleys 118, as discussed above.

Higher pressures may be needed for veneers of hardwood, such as birch. For example, in an embodiment, wherein hardwood is pre-dried by pressing,
the stack 130 of veneer sheets is pressed, at least at some point of time, with a pressure of at least 30 bar.

Referring to Figs. 7a and 7b, to realise such pressures, in an embodiment, the actuator arrangement 415 of the press 400 is configured to generate a pressure of at least 13 bar, more preferably at least 20 bar, and most preferably at least 25 bar, on a stack 130 of veneers arranged in between the first surface 410 and the second surface 420. The actuator arrangement 415 may comprise e.g. four, five, six, nine, at least four, at least five, or at least nine hydraulic cylinders 412.

Referring to Fig. 7a, an embodiment of the press 400 further comprises a control unit 430 configured to control the actuator arrangement 415 to generate a proper pressure to the stack 130. The press 400 may further comprise a display unit 440. The display unit 440 may be used e.g. to show the current pressure and/or for programming a pressure profile for the control unit 430. The term pressure profile refers to a temporal profile, i.e. the pressure P as function of time. The press 400 may further comprise a user interface device 450. The user interface device 450 may comprise e.g. at least one switch 452. By using the user interface device 450 a user may program a pressure profile. Moreover, the control unit 430 may be configured to generate a pressure to the stack 130 according to a predefined pressure profile. Examples of suitable pressure profiles were given above.

## Claims

1. A method for manufacturing veneers (120), the method comprising
- receiving a wood block (100),
- producing veneer (110) by peeling the wood block (100) with a veneer lathe (200) comprising
• a rotor (205) for rotating the wood block (100),
• a knife (220) for peeling veneer (110) from the wood block (100), and
• a roller nose bar (230) configured to press the wood block (100) and rotate in a manner independent of the knife (220), wherein
• a knife gap (222) is left in between the roller nose bar (230) and the knife (220) and
• the veneer (110) is configured to exit through the knife gap (222),
**characterized in that** the method is further comprising
- cutting the veneer (110) to form veneer sheets (120) including heart wood veneer sheets and other veneer sheets,
- arranging at least one of the veneer sheets (120) into a stack (130) of veneer sheets, and
- pressing the stack (130) of veneer sheets with a pressure (P) to dry the veneer sheets of the stack (130) to obtain pre-dried veneer sheets (140), wherein
- the wood block (100) is a block of softwood,
- the pressure (P) is at least 13 bar, and
- the pressure (P) does not exceed 40 bar, the method comprising
- further drying the heart wood veneer sheets, which are not pre-dried, and the pre-dried veneer sheets (140) in a drier (510) using heat and gas circulation to obtain dry veneers (142).

2. The method of claim 1, comprising
- pressing the stack only for a period of time that is less than an hour, preferably less than 30 minutes.

3. The method of the claim 1 or 2, comprising
- pressing the stack 130 of veneer sheets with a first pressure of 5 bar - 18 bar for 60 s - 240 s, thereafter
- pressing the stack of veneer sheets with a second pressure of 15 bar - 22 bar for 60 s - 300 s, and thereafter
- pressing the stack of veneer sheets with a pressure of 20 bar - 25 bar for 60 s - 600 s.

4. The method of any of the claims 1 to 3, wherein
- the wood block (100) is a block of spruce.

5. The method of claim 4, wherein
- the stack (130) comprises a veneer sheet (120) that
• is made of spruce,
• has a first mass (m1) before pressing the stack (130), and
• has such a moisture content that the density of the veneer sheet (120) is from 850 kg/m³ to 1000 kg/m³, the method comprising pressing the stack (130) in such a way that
- after pressing the stack (130), the veneer sheet (120) has a second mass (m2), wherein
- the second mass (m2) is at most 75 % of the first mass (m1).

6. The method of claim 4 or 5, wherein
- the stack (130) comprises ten veneer sheets (120) that
• are made of spruce,
• have a first total mass (m1_{T}) before pressing the stack (130), and
• have such a moisture content that the average density of the ten veneer sheets (120) is from 850 kg/m³ to 1000 kg/m³, the method comprising pressing the stack (130) in such a way that
- after pressing the stack (130), the ten veneer sheets (120) have a second total mass (m2_{T}), wherein
- the second total mass (m2_{T}) is at most 80 % of the first total mass (m1_{T}).

7. The method of any of the claims 1 to 6, comprising
- arranging at least twenty veneer sheets to the stack (130) of veneer sheets and
- pressing the stack (130) to dry the veneer sheets.

8. The method of any of the claims 1 to 7, comprising
- rotating the wood block (100) with a first peripheral velocity (v1) and
- rotating the roller nose bar (230) with a second peripheral velocity (v2), wherein
- the first peripheral (v1) velocity equals the second peripheral velocity (v2).

9. The method of any of the claims 1 to 8, comprising
- peeling wood block (100) such that the veneer (100) comprises checks (112i), wherein
- each check (112ᵢ) has a proportional depth (Bi/(Bi+Ai)) and
- an average (<Bᵢ/(Bᵢ+Aᵢ)>) of the proportional depths (Bi/(Bi+Ai)) is at least 55 %, preferably at least 60 % or at least 65 %.

10. The method of any of the claims 1 to 9, comprising
- peeling wood block (100) such that the veneer (100) comprises checks (112i), wherein
- each check (112i) is separated by a distance (Dᵢ) from a neighbouring check (112ᵢ₋₁) and
- an average (<Dᵢ>) of the distances (Dᵢ) is from 1 mm to 4 mm.

11. The method of any of the claims 1 to 10, comprising
- peeling wood block (100) such that the veneer (100) comprises ten regions (Rₖ), each region (Rₖ) having a length of 20 mm in a direction that is perpendicular to the grain direction, and each region (Rₖ) having checks (112i), wherein
- within each region (Rₖ), each check (112ᵢ) is separated by a distance (D_{i,k}) from a neighbouring check (112ᵢ₋₁),
- within each region (Rₖ), an average (<Dᵢ>ₖ) of the distances (D_{i,k}) is from 1 mm to 5 mm and
- a standard deviation of the averages (<Dᵢ>ₖ) of the distances (D_{i,k}) is at most 25 %, preferably at most 20 %, of an average (<<Dᵢ>ₖ>) of the averages (<Dᵢ>ₖ) of the distances (D_{i,k}).

12. The method of any of the claims 1 to 11, comprising
- peeling wood block (100) such that a roughness average (Ra) of a surface of the veneer (110) is at least 0.04 mm, wherein the roughness average (Ra) is measured according to the standard ISO 4288:1996 along a length of 20 mm in a direction (Sy) perpendicular to the grain direction of the veneer (110) and parallel to a direction of the plane of the veneer (110), and using a measuring tip having a radius of 2 mm.

13. The method of any of the claims 1 to 12, comprising
- peeling wood block (100) such that a surface of the veneer (110) has a profile comprising elevations (116) and valleys (118) in between the elevations (116), wherein
- an average distance between the elevations (116) is from 15 mm to 30 mm and
- a greatest height of the profile, as measured from a bottom of a deepest valley to a top of a highest elevation using a measuring tip with a radius of 2 mm and from a length of 20 mm, is from 0.2 mm to 0.5 mm.

14. The method of any of the claims 1 to 13, comprising
- pressing the roller nose bar (230) against the wood block (100) such that
- the knife gap (222) has a width (GW) and
- the veneer (110) or the veneer sheet (120) has a first thickness (t1), wherein
- the first thickness (t1) is less than the width (GW) of the knife gap (222); preferably
- the first thickness (t1) is at least 1 % less than the width (GW) of the knife gap (222).

15. The method of any of the claims 1 to 14, comprising
- rotating the wood block (100) with a first peripheral velocity (v1), wherein
- the first peripheral velocity (v1) is from 75 min/min to 400 m/min.

## Patentansprüche

1. Verfahren zur Herstellung von Furnieren (120), wobei das Verfahren Folgendes umfasst
- Empfangen eines Holzblocks (100),
- Herstellen von Furnier (110) durch Schälen des Holzblocks (100) mit einer Furnierdrehmaschine (200), die Folgendes umfasst
• einen Rotor (205) zum Drehen des Holzblocks (100),
• ein Messer (220) zum Schälen von Furnier (110) vom Holzblock (100), und
• eine Walzennasenleiste (230), die so konfiguriert ist, dass sie den Holzblock (100) presst und unabhängig vom Messer (220) dreht, wobei
• zwischen der Walzennasenleiste (230) und dem Messer (220) ein Messerspalt (222) gelassen wird und
• das Furnier (110) so konfiguriert ist, dass es durch den Messerspalt (222) austritt,
**dadurch gekennzeichnet, dass** das Verfahren weiterhin Folgendes umfasst
- Schneiden des Furniers (110), um Furnierblätter (120) zu bilden, darunter Kernholzfurnierblätter und andere Furnierblätter,
- Anordnen von mindestens einem der Furnierblätter (120) zu einem Stapel (130) von Furnierblättern, und
- Pressen des Stapels (130) von Furnierblättern mit einem Druck (P), um die Furnierblätter des Stapels (130) zu trocknen und vorgetrocknete Furnierblätter (140) zu erhalten,
wobei
- der Holzblock (100) ein Block aus Nadelholz ist,
- der Druck (P) mindestens 13 bar beträgt, und
- der Druck (P) 40 bar nicht übersteigt, wobei das Verfahren Folgendes umfasst
- weiteres Trocknen der nicht vorgetrockneten Kernholzfurnierblätter und der vorgetrockneten Furnierblätter (140) in einem Trockner (510) unter Verwendung von Wärme und Gaszirkulation, um trockene Furniere (142) zu erhalten.

2. Verfahren nach Anspruch 1, umfassend
- Pressen des Stapels nur für einen Zeitraum, der weniger als eine Stunde, vorzugsweise weniger als 30 Minuten beträgt.

3. Verfahren nach Anspruch 1 oder 2, umfassend
- Pressen des Stapels 130 Furnierblätter mit einem ersten Druck von 5 bar - 18 bar für 60 s - 240 s, danach
- Pressen des Stapels Furnierblätter mit einem zweiten Druck von 15 bar - 22 bar für 60 s - 300 s, und danach
- Pressen des Stapels Furnierblätter mit einem Druck von 20 bar - 25 bar für 60 s - 600 s.

4. Verfahren nach einem der Ansprüche 1 bis 3, wobei
- der Holzblock (100) ein Fichtenholzblock ist.

5. Verfahren nach Anspruch 4, wobei
- der Stapel (130) ein Furnierblatt (120) umfasst, das
• aus Fichtenholz besteht,
• vor dem Pressen des Stapels (130) eine erste Masse (m1) aufweist, und
• einen solchen Feuchtigkeitsgehalt hat, dass die Dichte des Furnierblatts (120) zwischen 850 kg/m³ und 1000 kg/m³ liegt, wobei das Verfahren das Pressen des Stapels (130) in einer solchen Weise umfasst, dass
- das Furnierblatt (120) nach dem Pressen des Stapels (130) eine zweite Masse (m2) aufweist, wobei
- die zweite Masse (m2) höchstens 75 % der ersten Masse (m1) beträgt.

6. Verfahren nach Anspruch 4 oder 5, wobei
- der Stapel (130) zehn Furnierblätter (120) umfasst, die
• aus Fichte bestehen,
• vor dem Pressen des Stapels (130) eine erste Gesamtmasse (m1_{T}) aufweisen, und
• einen solchen Feuchtigkeitsgehalt haben, dass die durchschnittliche Dichte der zehn Furnierblätter (120) zwischen 850 kg/m³ und 1000 kg/m³ liegt, wobei das Verfahren das Pressen des Stapels (130) in einer solchen Weise umfasst, dass
- die zehn Furnierblätter (120) nach dem Pressen des Stapels (130) eine zweite Gesamtmasse (m2_{T}) aufweisen, wobei
- die zweite Gesamtmasse (m2_{T}) höchstens 80 % der ersten Gesamtmasse (m1_{T}) beträgt.

7. Verfahren nach einem der Ansprüche 1 bis 6, umfassend
- Anordnen von mindestens zwanzig Furnierblättern zu dem Stapel (130) von Furnierblättern und
- Pressen des Stapels (130), um die Furnierblätter zu trocknen.

8. Verfahren nach einem der Ansprüche 1 bis 7, umfassend
- Drehen des Holzblocks (100) mit einer ersten Umfangsgeschwindigkeit (v1) und
- Drehen der Walzennasenleiste (230) mit einer zweiten Umfangsgeschwindigkeit (v2),
wobei
- die erste Umfangsgeschwindigkeit (v1) gleich der zweiten Umfangsgeschwindigkeit (v2) ist.

9. Verfahren nach einem der Ansprüche 1 bis 8, umfassend
- Schälen des Holzblocks (100), so dass das Furnier (100) Risse (112ᵢ) aufweist, wobei
- jeder Riss (112ᵢ) eine proportionale Tiefe (Bᵢ/(Bᵢ+Aᵢ)) aufweist und
- ein Durchschnitt (<Bᵢ/(Bᵢ+Aᵢ)>) der proportionalen Tiefen (Bᵢ/(Bᵢ+Aᵢ)) mindestens 55 %, vorzugsweise mindestens 60 % oder mindestens 65 % beträgt.

10. Verfahren nach einem der Ansprüche 1 bis 9, umfassend
- Schälen des Holzblocks (100), so dass das Furnier (100) Risse (112ᵢ) aufweist, wobei
- jeder Riss (112ᵢ) durch einen Abstand (Dᵢ) von einem benachbarten Riss (112ᵢ₋₁) getrennt ist und
- ein Durchschnitt (<Dᵢ>) der Abstände (Dᵢ) zwischen 1 mm und 4 mm liegt.

11. Verfahren nach einem der Ansprüche 1 bis 10, umfassend
- Schälen des Holzblocks (100), so dass das Furnier (100) zehn Bereiche (Rₖ) umfasst, wobei jeder Bereich (Rₖ) eine Länge von 20 mm in einer Richtung aufweist, die senkrecht zur Maserungsrichtung ist, und jeder Bereich (Rₖ) Risse (112ᵢ) aufweist, wobei
- innerhalb jedes Bereichs (Rₖ) jeder Riss (112ᵢ) durch einen Abstand (D_{i,k}) von einem benachbarten Riss (112ᵢ₋₁) getrennt ist,
- innerhalb jedes Bereichs (Rₖ) ein Durchschnitt (<Dᵢ>ₖ) der Abstände (D_{i,k}) zwischen 1 mm und 5 mm liegt und
- eine Standardabweichung der Durchschnitte (<Dᵢ>ₖ) der Abstände (D_{i,k}) höchstens 25 %, vorzugsweise höchstens 20 %, eines Durchschnitts (<<Dᵢ>ₖ>) der Durchschnitte (<Dᵢ>ₖ) der Abstände (D_{i,k}) beträgt.

12. Verfahren nach einem der Ansprüche 1 bis 11, umfassend
- Schälen eines Holzblocks (100) derart, dass ein Rauhigkeitsdurchschnitt (Ra) einer Oberfläche des Furniers (110) mindestens 0,04 mm beträgt, wobei der Rauhigkeitsdurchschnitt (Ra) gemäß der Norm ISO 4288:1996 entlang einer Länge von 20 mm in einer Richtung (Sy) senkrecht zur Maserungsrichtung des Furniers (110) und parallel zu einer Richtung der Ebene des Furniers (110) und unter Verwendung einer Messspitze mit einem Radius von 2 mm gemessen wird.

13. Verfahren nach einem der Ansprüche 1 bis 12, umfassend
- Schälen des Holzblocks (100), so dass eine Oberfläche des Furniers (110) ein Profil aufweist, das Erhebungen (116) und Täler (118) zwischen den Erhebungen (116) umfasst, wobei
- ein durchschnittlicher Abstand zwischen den Erhebungen (116) zwischen 15 mm und 30 mm liegt und
- eine größte Höhe des Profils, gemessen von der Unterseite eines tiefsten Tals bis zur Oberseite einer höchsten Erhebung unter Verwendung einer Messspitze mit einem Radius von 2 mm und einer Länge von 20 mm, zwischen 0,2 mm und 0,5 mm liegt.

14. Verfahren nach einem der Ansprüche 1 bis 13, umfassend
- Pressen der Walzennasenleiste (230) gegen den Holzblock (100), so dass
- der Messerspalt (222) eine Breite (GW) aufweist und
- das Furnier (110) oder das Furnierblatt (120) eine erste Dicke (t1) aufweist, wobei
- die erste Dicke (t1) geringer ist als die Breite (GW) des Messerspalts (222);
vorzugsweise
- die erste Dicke (t1) mindestens 1 % geringer ist als die Breite (GW) des Messerspalts (222).

15. Verfahren nach einem der Ansprüche 1 bis 14, umfassend
- Drehen des Holzblocks (100) mit einer ersten Umfangsgeschwindigkeit (v1), wobei
- die erste Umfangsgeschwindigkeit (v1) zwischen 75 min/min und 400 m/min liegt.

## Revendications

1. Procédé de fabrication de placages (120), le procédé comprenant
- la réception d'un bloc de bois (100),
- la production de placage (110) par déroulage du bloc de bois (100) avec une dérouleuse (200) comprenant
• un rotor (205) pour faire tourner le bloc de bois (100),
• un couteau (220) pour dérouler le placage (110) du bloc de bois (100), et
• une barre de compression rotative (230) configurée pour presser le bloc de bois (100) et tourner d'une manière indépendante du couteau (220), dans lequel
• un espace de couteau (222) est laissé entre la barre de compression rotative (230) et le couteau (220) et
• le placage (110) est configuré pour sortir à travers l'espace de couteau (222),
**caractérisé en ce que** le procédé comprend en outre
- la découpe du placage (110) pour former des feuilles de placage (120) comportant des feuilles de placage de bois de coeur et d'autres feuilles de placage,
- l'agencement d'au moins une des feuilles de placage (120) dans une pile (130) de feuilles de placage, et
- le pressage de la pile (130) de feuilles de placage avec une pression (P) pour sécher les feuilles de placage de la pile (130) pour obtenir des feuilles de placage préséchées (140), dans lequel
- le bloc de bois (100) est un bloc de bois tendre,
- la pression (P) est d'au moins 13 bar, et
- la pression (P) ne dépasse pas 40 bar, le procédé comprenant
- le séchage supplémentaire des feuilles de placage de bois de coeur, qui ne sont pas préséchées, et des feuilles de placage préséchées (140) dans un séchoir (510) à l'aide de la chaleur et la circulation de gaz pour obtenir des placages secs (142).

2. Procédé selon la revendication 1, comprenant
- le pressage de la pile uniquement pendant une période de temps qui est inférieure à une heure, de préférence inférieure à 30 minutes.

3. Procédé selon la revendication 1 ou 2, comprenant
- le pressage de la pile 130 de feuilles de placage avec une première pression de 5 bar à 18 bar pendant 60 s à 240 s, ensuite
- le pressage de la pile de feuilles de placage avec une seconde pression de 15 bar à 22 bar pendant 60 s à 300 s, puis
- le pressage de la pile de feuilles de placage avec une pression de 20 bar à 25 bar pendant 60 s à 600 s.

4. Procédé selon l'une quelconque des revendications 1 à 3, dans lequel
- le bloc de bois (100) est un bloc d'épicéa.

5. Procédé selon la revendication 4, dans lequel
- la pile (130) comprend une feuille de placage (120) qui
• est constituée d'épicéa,
• a une première masse (m1) avant le pressage de la pile (130), et
• a une teneur en humidité telle que la masse volumique de la feuille de placage (120) est de 850 kg/m³ à 1 000 kg/m3, le procédé comprenant le pressage de la pile (130) de telle manière que
- après le pressage de la pile (130), la feuille de placage (120) a une seconde masse (m2), dans lequel
- la seconde masse (m2) est au plus égale à 75 % de la première masse (m1).

6. Procédé selon la revendication 4 ou 5, dans lequel
- la pile (130) comprend dix feuilles de placage (120) qui
• sont constituées d'épicéa,
• ont une première masse totale (m1_{T}) avant le pressage de la pile (130), et
• ont une teneur en humidité telle que la masse volumique moyenne des dix feuilles de placage (120) est de 850 kg/m³ à 1 000 kg/m³, le procédé comprenant le pressage de la pile (130) de telle manière que
- après le pressage de la pile (130), les dix feuilles de placage (120) ont une seconde masse totale (m2_{T}), dans lequel
- la seconde masse totale (m2_{T}) est au plus égale à 80 % de la première masse totale (m1_{T}).

7. Procédé selon l'une quelconque des revendications 1 à 6, comprenant
- l'agencement d'au moins vingt feuilles de placage sur la pile (130) de feuilles de placage et
- le pressage de la pile (130) pour sécher les feuilles de placage.

8. Procédé selon l'une quelconque des revendications 1 à 7, comprenant
- la rotation du bloc de bois (100) avec une première vitesse périphérique (v1) et
- la rotation de la barre de compression rotative (230) avec une seconde vitesse périphérique (v2), dans lequel
- la première vitesse périphérique (v1) est égale à la seconde vitesse périphérique (v2).

9. Procédé selon l'une quelconque des revendications 1 à 8, comprenant
- le déroulage d'un bloc de bois (100) de sorte que le placage (100) comprend des gerces (112ᵢ), dans lequel
- chaque gerce (112ᵢ) a une profondeur proportionnelle (Bᵢ/(Bᵢ+Aᵢ)) et
- une moyenne (<Bᵢ/(Bᵢ+Aᵢ)>) des profondeurs proportionnelles (Bᵢ/(Bᵢ+Aᵢ)) est d'au moins 55 %, de préférence d'au moins 60 % ou d'au moins 65 %.

10. Procédé selon l'une quelconque des revendications 1 à 9, comprenant
- le déroulage d'un bloc de bois (100) de sorte que le placage (100) comprend des gerces (112ᵢ), dans lequel
- chaque gerce (112ᵢ) est séparée d'une distance (Dᵢ) d'une gerce voisine (112ᵢ₋₁) et
- une moyenne (<Dᵢ>) des distances (Dᵢ) est de 1 mm à 4 mm.

11. Procédé selon l'une quelconque des revendications 1 à 10, comprenant
- le déroulage du bloc de bois (100) de sorte que le placage (100) comprend dix régions (Rₖ), chaque région (Rₖ) ayant une longueur de 20 mm dans une direction qui est perpendiculaire à la direction du grain, et chaque région (Rₖ) ayant des gerces (112ᵢ), dans lequel
- au sein de chaque région (Rₖ), chaque gerce (112ᵢ) est séparée d'une distance (D_{i,k}) d'une gerce voisine (112ᵢ₋₁),
- au sein de chaque région (Rₖ), une moyenne (<Dᵢ>ₖ) des distances (D_{i,k}) est de 1 mm à 5 mm et
- un écart type des moyennes (<Dᵢ>ₖ) des distances (D_{i,k}) est au plus 25 %, de préférence au plus 20 %, d'une moyenne (<<Dᵢ>ₖ>) des moyennes (<Dᵢ>ₖ) des distances (D_{i,k}).

12. Procédé selon l'une quelconque des revendications 1 à 11, comprenant
- le déroulage d'un bloc de bois (100) de sorte qu'une rugosité moyenne (Ra) d'une surface du placage (110) est d'au moins 0,04 mm, dans lequel la rugosité moyenne (Ra) est mesurée selon la norme ISO 4288:1996 sur une longueur de 20 mm dans une direction (Sy) perpendiculaire à la direction du grain du placage (110) et parallèle à une direction du plan du placage (110), et à l'aide d'une pointe de mesure ayant un rayon de 2 mm.

13. Procédé selon l'une quelconque des revendications 1 à 12, comprenant
- le déroulage du bloc de bois (100) de sorte qu'une surface du placage (110) a un profil comprenant des élévations (116) et des vallées (118) entre les élévations (116), dans lequel
- une distance moyenne entre les élévations (116) est de 15 mm à 30 mm et
- la plus grande hauteur du profil, telle que mesurée depuis un fond d'une vallée la plus profonde jusqu'au sommet d'une élévation la plus élevée à l'aide d'une pointe de mesure d'un rayon de 2 mm et d'une longueur de 20 mm, est de 0,2 mm à 0,5 mm.

14. Procédé selon l'une quelconque des revendications 1 à 13, comprenant
- le pressage de la barre de compression rotative (230) contre le bloc de bois (100) de sorte que
- l'espace de couteau (222) a une largeur (GW) et
- le placage (110) ou la feuille de placage (120) a une première épaisseur (t1), dans lequel
- la première épaisseur (t1) est inférieure à la largeur (GW) de l'espace de couteau (222) ; de préférence
- la première épaisseur (t1) est inférieure d'au moins 1 % à la largeur (GW) de l'espace de couteau (222).

15. Procédé selon l'une quelconque des revendications 1 à 14, comprenant
- la rotation du bloc de bois (100) avec une première vitesse périphérique (v1), dans lequel
- la première vitesse périphérique (v1) est de 75 min/min à 400 m/min.
